# EUROPÄISCHE PATENTSCHRIFT

(11) **EP 1 648 993 B1**
(45) Veröffentlichungstag und Bekanntmachung des Hinweises auf die Patenterteilung: **03.01.2007**
(21) Anmeldenummer: 04740831.5
(22) Anmeldetag: 09.07.2004
(51) Int. Cl.: C12H 1/06, A23L 2/70, B04B 11/08, B04B 1/08

(54) **VERFAHREN UND VORRICHTUNG ZUR EINSTELLUNG DES TRUBGEHALTES EINES GETRÄNKS**
METHOD AND DEVICE FOR ADJUSTING THE SEDIMENT CONTENT OF A DRINK
PROCEDE ET DISPOSITIF POUR REGLER LA TURBIDITE D'UNE BOISSON

(30) Priorität: 30.07.2003 DE 10335191
(43) Veröffentlichungstag der Anmeldung: 26.04.2006
(73) Patentinhaber: Westfalia Separator AG, 59302 Oelde (DE)
(72) Erfinder: SPIEKERMEIER, Bernd, 59302 Oelde (DE); WAUBKE, Carsten, 59302 Oelde (DE)
(74) Vertreter: Specht, Peter
(86) Internationale Anmeldenummer: PCT/EP2004/007543
(87) Internationale Veröffentlichungsnummer: WO 2005/014772

(56) Entgegenhaltungen:
- WO-A-01/57177
- WO-A-92/03067
- CH-A- 318 800
- DE-A- 19 900 667
- DE-C- 3 722 866
- DE-C- 4 242 526

## Beschreibung

Die Erfindung betrifft ein Verfahren und eine Vorrichtung zur Einstellung des Trubgehaltes eines Getränks.

Bei der Herstellung eines Getränkes, insbesondere Bier, ist es bekannt, den Trubgehalt des Getränkes dadurch einzustellen, dass man das Getränk mittels einer oder mehrerer parallel und/oder in Reihe geschalteter Zentrifugen, insbesondere Tellerzentrifugen bzw. Separatoren klärt (siehe WO 9203067 und DE 195 26 005 C1), insbesondere von Trubstoffen wie Einweiß. Insbesondere als letzte Zentrifuge des Klärungsprozesses wird bevorzugt ein Tellerseparator verwendet.

Aufgrund der hohen Drehzahlen im überkritischen Betrieb des Tellerseparators wird dabei aber sogar oftmals ein zu hoher Klärungsgrad erreicht, denn gerade bei feintrüben Getränken wie bestimmten Biersorten ist es oftmals durchaus erwünscht, dass ein definierter Anteil i.allg. schwebender Trubstoffe im Getränk verbleibt. Insbesondere bei Bier ist es wichtig, aus Geschmacksgründen feinste Partikel in der Schwebe zu halten.

Man könnte zwar zur Verringerung des Klärungsgrades die Drehzahl der Tellerzentrifuge herabsetzen, dies hat jedoch den Nachteil, dass die Tellerzentrifuge u.U. in kritischen Drehzahlbereichen (Resonanzbereichen) betrieben wird und dass eine leistungsmäßige Überbeanspruchung des Tellerpakets auftritt.

Eine Selektion durch eine Leistungsanpassung des Zulaufes ist ebenfalls schwierig und führt nicht nur zu steuerungs- und regelungstechnischen Problemen sondern im Regelfall ebenfalls zu einer leistungsmäßigen Überbeanspruchung des Tellerpakets.

Aus der GB 991 500 ist eine Zentrifuge bekannt, die eine Flüssigkeit in drei Fraktionen auftrennt und zwei der drei Fraktionen wieder zusammenmischt (siehe Seite 3 ab Zeile 33 dieses Standes der Technik).

Auch die DE 19900667 beschreibt eine Zentrifuge.

Die Erfindung hat gegenüber dem genannten Stand der Technik die Aufgabe, die eingangs beschriebenen Probleme auf einfache Weise zu lösen.

Die Erfindung hat die Aufgabe, die vorstehend beschriebenen Probleme auf einfache Weise zu lösen.

Die Erfindung erreicht dies in Hinsicht auf das Verfahren durch den Gegenstand des Anspruchs 1 und in Hinsicht auf den Separator zur Durchführung des Verfahrens durch den Gegenstand des Anspruchs 10.

Sie schafft ein Verfahren zur Einstellung eines definierten Trubgehaltes eines Getränks, insbesondere Bier, mit einer Zentrifuge, insbesondere einem Tellerseparator, mit folgenden Schritten:
- ein zu verarbeitendes Ausgangsprodukt wird in eine Separatortrommel geleitet, in welcher eine Klärung des Ausgangsproduktes von Trubstoffen in eine Klarphase und eine Feststoffphase erfolgt;
- die Klarphase und die Feststoffphase werden aus der Schleudertrommel abgeleitet;
- wobei außer der Feststoffphase und der Klarphase noch eine feintrübe Phase abgegriffen und der Klarphase vorzugsweise nach dem Ableiten aus dem Schleuderraum insbesondere vollständig zugesetzt wird.

Mit Hilfe dieses Verfahrens kann die Zentrifuge überkritisch bei höchsten Drehzahlen betrieben werden, denn durch den Zusatz einer bestimmten Menge feintrüber Phase lässt sich der Trubgehalt wieder auf den gewünschten Grad "anheben", auch wenn er vorher zu weit gesenkt worden ist. Eine Veränderung der Zulaufmenge ist nicht erforderlich. Dieses Verfahren bietet insbesondere Vorteile gegenüber dem einfachen Beisetzen unverarbeiteten Bieres, da hierbei zu große Partikel beigefügt werden. Bei dem Verfahren handelt es sich im Grund um eine Klärverfahren zur Klärung eines Getränks, insbesondere eines Bieres - hier wiederum bevorzugt eines Hefe-Weißbiers - oder eines Saftes, bei dem eine Klärung von Trubstoffen mit einer zusätzlichen Ableitung und Rückführung einer geringeren Menge noch etwas trüberer Phase in die Klarphase.

Das Verfahren ist besonders vorteilhaft zur Herstellung eines Bieres einsetzbar, wobei das Ausgangsprodukt dann zweckmäßig ein vorgeklärtes Bier, insbesondere ein Weißbier, und die feintrübe Phase ein feintrübes Bier (insbesondere ein feintrübes Weißbier) ist, welches dem geklärten Bier, dass die Klarphase darstellt, vollständig wieder zugesetzt wird. Feststoffe können in verschiedener Weise z.B. mittels Kolbenschiebern, Düsen oder dgl. abgeführt werden.

Zweckmäßig werden die Klarphase und die feintrübe Phase auf verschiedenen Durchmessern des Schleuderraumes abgegriffen und mittels verschiedener Schälscheiben aus der Schleudertrommel abgeleitet.

Es ist besonders vorteilhaft, wenn zum Erzielen eines definierten Trubgehaltes die Menge der der Klarphase zugesetzten feintrüben Phase steuer- oder regelbar ist. Vorteilhaft erfolgt das Ableiten der eher geringeren Menge an feintrüber Phase über wenigstens eine der Schälscheibe zur Ableitung der feintrüben Phase vorgeschaltete Drosselstelle, die vorzugsweise als insbesondere einstellbare und/oder austauschbare und damit leicht an die jeweiligen Bedingungen anpassbare Düse ausgebildet ist.

Es hat sich als besonders zweckmäßig erwiesen, wenn das Abziehen der feintrüben Phase am oder nahe zum Außendurchmesser eines Tellerpakets in der Schleudertrommel erfolgt.

Die Erfindung schafft auch einen Separator zur Durchführung des Verfahrens mit folgenden Merkmalen: einer Schleudertrommel mit einem Zulauf; eine erste Schälscheibe zum Abgriff einer Klarphase und eine zweite Schälscheibe zum Abgriff einer feintrüben Phase aus der Schleudertrommel, wobei die Produktableitung der zweiten Schälscheibe direkt ausschließlich in die Produktableitung der ersten Schälscheibe mündet.

Zweckmäßig ist ferner der Schälscheibe zum Abgriff der feintrüben Phase eine Einrichtung zur Einstellung der Volumenstroms in diese Schälscheibe, insbesondere eine einstellbare Düse vorgeschaltet.

Vorteilhafte Ausgestaltungen zeigen die übrigen Unteransprüche.

Nachfolgend wird die Erfindung unter Bezug auf die Zeichnung anhand von Ausführungsbeispielen näher beschrieben. Es zeigt:

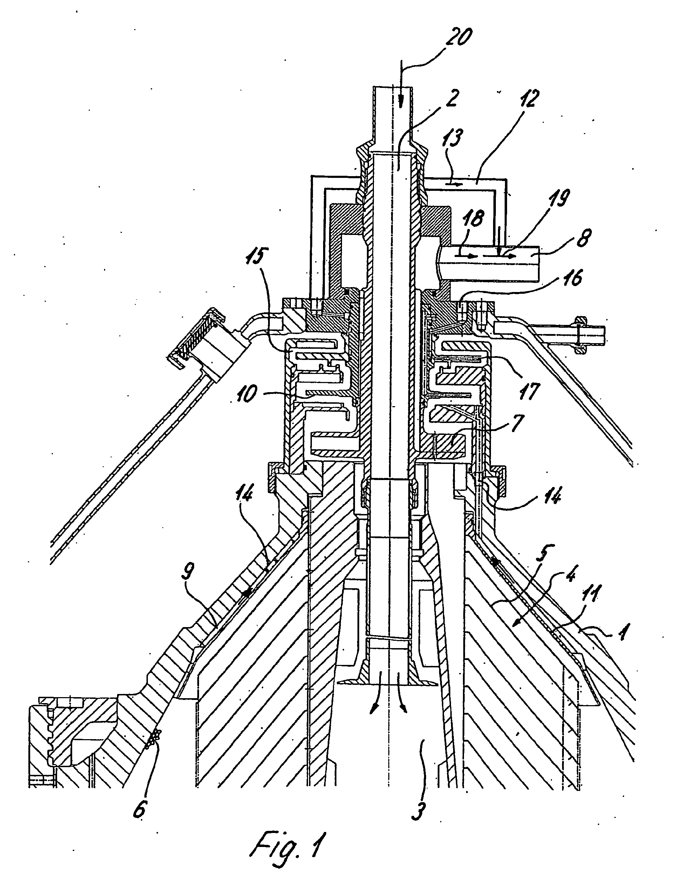

Fig. 1 einen Schnitt durch einen Teil eines Separators zur Einstellung eines definierten Trubgehaltes eines Getränks.

Fig. 1 zeigt eine Separatortrommel 1 mit einem Zulauf 2, dem ein Verteiler 3 nachgeordnet ist, durch den das zu verarbeitende Ausgangsprodukt 20 bzw. das zulaufende und zu verarbeitende Getränk, insbesondere ein mittels hier nicht dargestellter, vorgeschalteter Dekanter oder Separatoren vorsepariertes Bier (mit geringer Hefezellzahl) in den Schleuderraum 4 der Hochleistung-Separatortrommel 1 geleitet wird (hier nicht dargestellt).

Im Schleuderraum 4 mit einem Tellerpaket 5 erfolgt eine Klärung des Ausgangsproduktes 20 von groben Feststoffen, insbesondere Trubstoffen 6 wie Partikeln 6 und Schmutz, welche zum überwiegenden Teil über hier nicht dargestellte Feststoffaustragsöffnungen oder Düsen am Außendurchmesser der Separatortrommel 1 abgeleitet werden.

Die Klarphase 18 bzw. das geklärte Getränk wird an einem inneren Durchmesser über eine erste Schälscheibe 7 abgezogen und durch eine dieser nachgeschaltete Produktableitung 8 aus der Separatortrommel 1 abgeleitet.

Im Bereich des Außendurchmessers des Tellerpakets 5, vorzugsweise nahe radial außerhalb des Außenumfangs des Tellerpakets 5 wird ferner eine feintrübe Phase 13 - z.B. eine nicht oder weniger geklärte Bierphase - auf einem größeren Außendurchmesser als die Klarphase 18 durch eine oder mehrere Leitungen 9 oberhalb eines Scheidetellers 11 einer weiteren Schälscheibe 10 zugeleitet und von dieser abgezogen, welche hier oberhalb der ersten Schälscheibe 7 angeordnet ist. Aus der Schälscheibe 10 wird die feintrübe Phase 13 durch eine weitere Produktableitung 12 abgeleitet, welche in die Produktableitung 8 zur Ableitung der geklärten Phase mündet. Auf diese Weise wird der Klarphase 18 nach dem Durchtritt durch die Separatortrommel 1 wieder ein definierter Volumenstrom einer feintrüben Phase 13 zugemischt.

Eine oder mehrere Drosselstellen, insbesondere in Form u.U. auch einstellbarer oder wechselbarer Düsen 14, die sich an verschiedenen Stellen in der Leitung 9 zur zweiten Schälscheibe 10 befinden können, ermöglichen eine (ggf. auch nur einmalig auszuführende) Einstellung des Volumenstroms an feintrüber Phase 13, welche der Klarphase 18 beigemischt wird, um ein geklärtes Getränk 19 mit einem definiertem Trubgehalt zu erhalten.

Optional kann ein Ventil (hier nicht dargestellt) in die Produktableitung 12 zur Ableitung der feintrüben Phase 13 geschaltet sein, um den Volumenstrom zu unterbrechen.

Derart ist es auf einfache Weise möglich, denn Separator mit sehr hoher Drehzahl unkritisch zu betreiben, ohne einen unerwünscht geringen Trubgehalt im geklärten Getränk 19 zu erhalten.

Der Volumenstrom an feintrüber Phase kann durch eine Messung der Trübung nach dem Zumischen oder eine Trübungsmessung in der Konzentratleitung 9 selbst gesteuert der geregelt werden.

Oberhalb der zweiten Schälscheibe 10 - auch Konzentratgreifer genannt - kann eine hydrohermetische Sperrkammer 15 ausgebildet sein, welcher durch einen Sperrkammerzulauf 16 und eine Sperrscheibe 17 entgastes oder steriles Wasser zuleitbar ist, um eine Sauerstoffaufnahme an der zweiten Schälscheibe 10 auf einfache Weise zu vermeiden.

### Bezugszeichen

- Separatortrommel: 1
- Zulauf: 2
- Verteiler: 3
- Schleuderraum: 4
- Tellerpaket: 5
- Feststoffe: 6
- erste Schälscheibe: 7
- Produktableitung: 8
- Leitung: 9
- zweite Schälscheibe: 10
- Scheideteller: 11
- Produktableitung: 12
- feintrübe Phase: 13
- Düsen: 14
- Sperrkammer: 15
- Sperrkammerzulauf: 16
- Sperrscheibe: 17
- Klarphase: 18
- geklärtes Getränk: 19
- Ausgangsprodukt: 20

## Patentansprüche

1. Verfahren zur Einstellung eines definierten Trubgehaltes eines Getränks, insbesondere eines Bier- oder Saftgetränkes, mit einer Zentrifuge, insbesondere einem Tellerseparator, mit folgenden Schritten:
a) ein zu verarbeitendes Ausgangsprodukt (20) wird in eine Schleudertrommel (1) geleitet, in welcher eine Klärung des Ausgangsproduktes von Trubstoffen in eine Klarphase (18) und eine Feststoffphase (6) erfolgt;
b) die Klarphase (18) und die Feststoffphase (6) werden aus der Schleudertrommel abgeleitet;
**dadurch gekennzeichnet, dass**
c) außer der Feststoffphase (6) und der Klarphase (18) noch eine feintrübe Phase (13) in der Schleudertrommel (1) abgegriffen und der Klarphase (18) nach dem Ableiten aus dem Schleuderraum (4) insbesondere vollständig wieder zugesetzt wird.

2. Verfahren nach Anspruch 1, **dadurch gekennzeichnet, dass** die Klarphase (18) und die feintrüber Phase (13) auf verschiedenen Durchmessern des Schleuderraumes (4) abgegriffen und mittels verschiedener Schälscheiben (7, 10) aus der Schleudertrommel (1) abgeleitet werden.

3. Verfahren nach einem der vorstehenden Ansprüche, **dadurch gekennzeichnet, dass** das Ableiten der feintrüben Phase (13) über wenigstens eine der Schälscheibe (10) zur Ableitung der feintrüben Phase (13) vorgeschaltete Leitung (9) erfolgt, die eine wenigstens eine Drosselstelle aufweist.

4. Verfahren nach einem der vorstehenden Ansprüche, **dadurch gekennzeichnet, dass** die wenigstens eine Drosselstelle als Düse ausgebildet ist.

5. Verfahren nach einem der vorstehenden Ansprüche, **dadurch gekennzeichnet, dass** die Düse (14) austauschbar und/oder einstellbar ausgelegt ist.

6. Verfahren nach einem der vorstehenden Ansprüche, **dadurch gekennzeichnet, dass** die Menge der der Klarphase (18) zugesetzten feintrüben Phase (13) steuer- oder regelbar ist.

7. Verfahren nach einem der vorstehenden Ansprüche, **dadurch gekennzeichnet, dass** das Abziehen der feintrüben Phase (13) am Außendurchmesser eines Tellerpakets in der Schleudertrommel (5) erfolgt.

8. Verfahren nach einem der vorstehenden Ansprüche, **dadurch gekennzeichnet, dass** das Abziehen der feintrüben Phase (13) nahe zum Außendurchmesser des Tellerpakets (5) in der Schleudertrommel (4) erfolgt.

9. Verfahren nach einem der vorstehenden Ansprüche, **dadurch gekennzeichnet, dass** das Ausgangsprodukt ein vorgeklärtes Bier - insbesondere ein Weißbier - und die feintrübe Phase (13) ein feintrübes Bier ist.

10. Separator zur Durchführung des Verfahrens nach einem der vorstehenden Ansprüche, mit folgenden Merkmalen:
- eine Schleudertrommel (1) mit einem Zulauf (2);
- eine erste Schälscheibe (7) zum Abgriff einer Klarphase (18) und eine zweite Schälscheibe (10) zum Abgriff einer feintrüben Phase (13) aus der Schleudertrommel (1);
- wobei eine Produktableitung (12) der zweiten Schälscheibe (10) direkt ausschließlich in eine Produktableitung (8) der ersten Schälscheibe (7) mündet.

11. Separator nach Anspruch 10, **dadurch gekennzeichnet, dass** der Schälscheibe (10) zum Abgriff der feintrüben Phase (13) eine Einrichtung zur Einstellung der Volumenstroms in diese Schälscheibe (10), insbesondere eine einstellbare Düse (14) vorgeschaltet ist.

12. Separator nach Anspruch 10 oder 11, **dadurch gekennzeichnet, dass** oberhalb der Schälscheibe (10) zum Abgriff der feintrüben Phase (13) eine fluidbeaufschlagbare Sperrkammer (15) angeordnet ist.

13. Separator nach Anspruch 12, **dadurch gekennzeichnet, dass** die fluidbeaufschlagbare Sperrkammer (15) eine Sperrscheibe (17) aufweist.

## Claims

1. Method for setting a defined cloud content of a drink, in particular of a beer or juice drink, with a centrifuge, in particular a plate separator, having the following steps:
a) an initial product (20) to be processed is conducted into a centrifugal drum (1) in which a clarification of the initial product of clouding substances into a clear phase (18) and a solid phase (6) takes place;
b) the clear phase (18) and the solid phase (6) are discharged from the centrifugal drum;
**characterized in that**,
c) in addition to the solid phase (6) and the clear phase (18), a fine-cloudy phase (13) is also tapped off in the centrifugal drum (1) and, after discharge from the centrifugal drum (4), is added again, in particular completely, to the clear phase (18).

2. Method according to Claim 1, **characterized in that** the clear phase (18) and the fine-cloudy phase (13) are tapped off on different diameters of the centrifugal space (4) and are discharged out of the centrifugal drum (1) by means of different paring discs (7, 10).

3. Method according to one of the preceding claims, **characterized in that** the discharge of the fine-cloudy phase (13) takes place via at least one conduit (9) which precedes the paring disc (10) for discharging the fine-cloudy phase (13) and which has at least one throttle point.

4. Method according to one of the preceding claims, **characterized in that** the at least one throttle point is designed as a nozzle.

5. Method according to one of the preceding claims, **characterized in that** the nozzle (14) is designed exchangeably and/or adjustably.

6. Method according to one of the preceding claims, **characterized in that** the quantity of the fine-cloudy phase (13) added to the clear phase (18) can be controlled or regulated.

7. Method according to one of the preceding claims, **characterized in that** the fine-cloudy phase (13) is drawn off on the outside diameter of a plate stack in the centrifugal drum (5).

8. Method according to one of the preceding claims, **characterized in that** the fine-cloudy phase (13) is drawn off near the outside diameter of the plate stack (5) in the centrifugal drum (4).

9. Method according to one of the preceding claims, **characterized in that** the initial product is a pre-clarified beer, in particular a wheat beer, and the fine-cloudy phase (13) is a fine-cloudy beer.

10. Separator for carrying out the method according to one of the preceding claims, having the following features:
- a centrifugal drum (1) with an inflow (2);
- a first paring disc (7) for tapping off a clear phase (18) and a second paring disc (10) for tapping off a fine-cloudy phase (13) from the centrifugal drum (1);
- a product discharge (12) of the second paring disc (10) directly issuing solely into a product discharge (8) of the first paring disc (7).

11. Separator according to Claim 10, **characterized in that** the paring disc (10) for tapping off the fine-cloudy phase (13) is preceded by a device for setting the volumetric flow into this paring disc (10), in particular an adjustable nozzle (14).

12. Separator according to Claim 10 or 11, **characterized in that** a fluid-loadable blocking chamber (15) is arranged above the paring disc (10) for tapping off the fine-cloudy phase (13).

13. Separator according to Claim 12, **characterized in that** the fluid-loadable blocking chamber (15) has a blocking disc (17).

## Revendications

1. Procédé de réglage d'une turbidité définie d'une boisson, en particulier d'une bière ou d'un jus, avec une centrifugeuse, en particulier un séparateur à plateaux, comportant les étapes suivantes :
a) un produit initial (20), destiné à être traité, est introduit dans un tambour de centrifugation (1), dans lequel est effectuée une clarification des matières troubles du produit initial pour obtenir une phase de produit clarifié (18) et une phase de matières solides (6) ;
b) la phase de produit clarifié (18) et la phase de matières solides (6) sont évacuées hors du tambour de centrifugation (1) ;
**caractérisé en ce que**
c) outre la phase de matières solides (6) et la phase de produit clarifié (18), une phase de dépôts fins (13) est également prélevée dans le tambour de centrifugation (1) et est à nouveau ajoutée, en particulier en totalité, à la phase de produit clarifié (18) après l'évacuation hors de l'enceinte de centrifugation (4).

2. Procédé selon la revendication 1, **caractérisé en ce que** la phase de produit clarifié (18) et la phase de dépôts fins (13) sont prélevées en différents diamètres de l'enceinte de centrifugation (4) et sont évacuées hors du tambour de centrifugation (1) au moyen de différents plateaux de raclage (7, 10).

3. Procédé selon l'une quelconque des revendications précédentes, **caractérisé en ce que** la phase de dépôts fins (13) est évacuée par l'intermédiaire d'au moins une conduite (9), qui est montée en amont du plateau de raclage (10) destiné à l'évacuation de la phase de dépôts fins (13) et qui comporte au moins une zone d'étranglement.

4. Procédé selon l'une quelconque des revendications précédentes, **caractérisé en ce que** ladite au moins une zone d'étranglement est réalisée sous forme de buse.

5. Procédé selon l'une quelconque des revendications précédentes, **caractérisé en ce que** la buse (14) est réalisée sous forme amovible et/ou réglable.

6. Procédé selon l'une quelconque des revendications précédentes, **caractérisé en ce que** la quantité de la phase de dépôts fins (13), ajoutée à la phase de produit clarifié (18), peut être commandée ou réglée.

7. Procédé selon l'une quelconque des revendications précédentes, **caractérisé en ce que** la phase de dépôts fins (13) est soutirée au niveau du diamètre extérieur d'un ensemble de plateaux (5) dans le tambour de centrifugation (4).

8. Procédé selon l'une quelconque des revendications précédentes, **caractérisé en ce que** la phase de dépôts fins (13) est soutirée à proximité du diamètre extérieur d'un ensemble de plateaux (5) dans le tambour de centrifugation (4).

9. Procédé selon l'une quelconque des revendications précédentes, **caractérisé en ce que** le produit initial est une bière pré-clarifiée - en particulier une bière blanche - et la phase de dépôts fins (13) est une bière à dépôts fins.

10. Séparateur destiné à la mise en oeuvre du procédé selon l'une quelconque des revendications précédentes, comportant les caractéristiques suivantes :
- un tambour de centrifugation (1) avec un conduit d'admission (2);
- un premier plateau de raclage (7) destiné à l'évacuation d'une phase de produit clarifié (18) et un deuxième plateau de raclage (10) destiné à l'évacuation d'une phase de dépôts fins (13) hors du tambour de centrifugation (1) ;
- une conduite d'évacuation du produit (12) du deuxième plateau de raclage (10) débouchant directement exclusivement dans une conduite d'évacuation du produit (8) du premier plateau de raclage (7).

11. Séparateur selon la revendication 10, **caractérisé en ce qu'**en amont du plateau de raclage (10) destiné à l'évacuation de la phase de dépôts fins (13) est monté un dispositif de réglage du débit volumétrique dans ce plateau de raclage (10), en particulier une buse (14) réglable.

12. Séparateur selon la revendication 10 ou 11, **caractérisé en ce qu'**une chambre d'arrêt (15), pouvant être alimentée par un fluide, est agencée au-dessus du plateau de raclage (10) destiné à l'évacuation de la phase de dépôts fins (13).

13. Séparateur selon la revendication 12, **caractérisé en ce que** la chambre d'arrêt (15) pouvant être alimentée par un fluide comporte un plateau d'arrêt (17).
